Europäisches Patentamt

European Patent Office

Office européen des brevets

(19)

(11) Numéro de publication : **0 120 766**
**B1**

(12)

# FASCICULE DE BREVET EUROPÉEN

(45) Date de publication du fascicule du brevet :
10.09.86

(21) Numéro de dépôt : 84400541.3

(22) Date de dépôt : 16.03.84

(51) Int. Cl.⁴ : **D 21 D   5/04**, D 21 B   1/34,
D 21 B   1/32

(54) Procédé et dispositif de triage d'un mélange de pâte à papier et d'impuretés.

(30) Priorité : 25.03.83 FR 8304929

(43) Date de publication de la demande :
03.10.84 Bulletin 84/40

(45) Mention de la délivrance du brevet :
10.09.86 Bulletin 86/37

(84) Etats contractants désignés :
AT BE CH DE FR GB IT LI NL SE

(56) Documents cités :
DE-A- 2 757 175
GB-A- 2 072 033
US-A- 2 826 126
US-A- 4 136 018

(73) Titulaire : **E. + M. Lamort Société Anonyme dite:**
**rue de la Fontaine Ludot**
**F-51300 Vitry-le-François (FR)**

(72) Inventeur : **Lamort, Jean-Pierre**
**3, Boulevard Carnot**
**F-51300 Vitry le François (FR)**

(74) Mandataire : **Loyer, Yves et al**
**CABINET PIERRE LOYER 18, rue de Mogador**
**F-75009 Paris (FR)**

## Description

La récupération des vieux papiers occupe une place de plus en plus importante dans la production de papier.

Mais elle pose également des problèmes accrus du fait des impuretés qui sont mélangées aux vieux papiers, notamment les revêtements plastiques, les ficelles, les colles adhésives, etc.

Dans la plupart des cas, les vieux papiers sont d'abord déchiquetés et mélangés à de l'eau dans des appareils dénommés pulpeurs primaires.

Certains de ces appareils ont la forme d'un récipient au fond duquel tourne un agitateur désintégrateur placé au-dessus d'une grille perforée.

A travers cette grille passe une pâte encore grossière et sale qui est envoyée à un trieur secondaire tel que celui décrit au FR-A-2 410 081.

Les refus de cette grille provoquent progressivement un bouchage de la grille et il faut les évacuer.

Selon une technique récente, ces refus sont évacués à la partie inférieure de la grille et lavés dans un appareil clos, comme décrit au FR-A-2 441 681.

Selon cette technique et avec cet appareil, la pâte récupérée est recyclée au pulpeur primaire tandis que les refus lavés sont jetés. En effet, cet appareil reçoit du pulpeur des produits mal désintégrés et il possède lui-même un pouvoir désintégrant élevé ce qui nécessite un nouveau passage de la pâte récupérée dans le pulpeur primaire.

D'autres appareils de préparation des vieux papiers, notamment ceux connus sous le nom de pulpeurs à hélice ou « hélico » ne comportent pas de grille et n'effectuent aucun triage, même grossier.

Ils opèrent simplement une désintégration, une remise en suspension des fibres des papiers en présence d'eau sans altération des contaminants qui conservent leurs dimensions et leur forme ; ces appareils fournissent un mélange contenant environ 15 à 20 % de matière sèche ; le mélange est alors versé dans un cuvier ouvert de grandes dimensions où il est brassé par un agitateur avec adjonction d'eau jusqu'à une concentration de environ 5 % de matière sèche puis il est repris par une pompe spéciale pour être renvoyé dans un séparateur de type trommel à tamis, ou tamis vibrant, travaillant en continu.

Une telle installation nécessite une pompe capable d'absorber des impuretés de grande taille, et une telle pompe est sujette à de nombreuses pannes ou avaries.

D'autre part, les appareils de type trommel à tamis ou tamis vibrant ont un faible débit de sorte que cette pompe doit travailler sous un faible débit, ce qui conduit à l'adoption de pompes volumétriques ; de telles pompes sont très coûteuses et grèvent lourdement l'installation.

L'état de la technique comprend également des appareils de triage comportant au moins un tamis plan ou cylindrique devant lequel passe un agitateur à ailettes profilées pour donner un effet de dépression à chaque passage des ailettes (ou foils). Un tel agitateur n'opère aucun déchiquetage et n'a pas d'autre rôle que d'empêcher le bouchage des perforations du tamis par les contaminants. Ces appareils de triage opèrent en continu avec une arrivée de matériau à trier, une sortie de pâte acceptée et une sortie de refus par où s'évacue un mélange de pâte et de contaminants. De tels appareils ne peuvent que difficilement être utilisés au triage des produits sortant d'un pulpeur et sont applicables comme classeurs secondaires. Un appareil de ce type est décrit au brevet GB-A-2 072 033.

La présente invention a pour objet un procédé et un dispositif permettant aussi bien de trier directement les produits sortant d'un pulpeur, ou de laver les refus d'un pulpeur à grille, ou encore de jouer le rôle d'un classeur, mais avec lavage complet des refus, récupération de la totalité de la bonne pâte et rejets de contaminants à l'état solide (et non en suspension).

Conformément au procédé de triage d'un mélange de pâte à papier et d'impuretés selon l'invention, le mélange résultant d'une opération de désintégration de vieux papiers ou de classement de pulpe est transféré dans un volume clos en forme de tambour ou de volume de révolution d'axe sensiblement horizontal, comportant une paroi sensiblement verticale munie d'une plaque perforée devant laquelle tourne un agitateur en forme d'hélice à ailettes profilées se déplaçant à faible distance et dans un plan parallèlement à ladite plaque perforée, lesdites ailettes ayant une section transversale à profil hydrodynamique de nature à créer une dépression devant la plaque perforée à chaque passage d'ailettes, ledit volume comportant une entrée située à l'opposé de la plaque perforée, un volume annexe de récupération de pâte acceptée, en arrière de la plaque perforée, et une sortie de refus, et le procédé est caractérisé en ce que le mélange à trier est introduit en discontinu dans le volume clos par ouverture et fermeture d'une vanne placée sur l'entrée, le volume est soumis à l'aspiration d'une pompe, le mélange est additionné d'eau au moyen d'une arrivée d'eau pendant son introduction, cette addition d'eau étant poursuivie après fermeture de la vanne d'entrée jusqu'à lavage des refus, puis l'arrivée d'eau est fermée, le volume est vidé d'eau par l'aspiration de la pompe, après quoi les refus sont déchargés par gravité par une large ouverture inférieure contrôlée par une vanne qui n'est ouverte que le temps d'opérer cette décharge, et en ce que les ailettes de l'agitateur ont un bord d'attaque conformé en spirale de Bernoulli d'angle constant de l'ordre de 30°.

Le processus est ensuite répété sur une nouvelle quantité de mélange.

Le dispositif de triage d'un mélange de pâte à papier et d'impuretés, selon l'invention comprend un volume clos en forme de tambour ou de volume de révolution d'axe sensiblement horizontal comportant une paroi sensiblement verticale munie d'une plaque perforée devant laquelle tourne un agitateur en forme d'hélice à ailettes profilées se déplaçant à faible distance et dans un plan parallèlement à ladite plaque perforée, lesdites ailettes ayant une section transversale à profil hydrodynamique de nature à créer une dépression devant la plaque perforée à chaque passage d'ailettes, ledit volume comportant une entrée située à l'opposé de la plaque perforée, un volume de récupération de pâte acceptée, situé en arrière de la plaque perforée, et une sortie de refus, et il est caractérisé en ce qu'il comporte une vanne contrôlant l'entrée, une arrivée d'eau contrôlée par une vanne, une communication à l'air libre, l'évacuation de rejets ayant la forme d'une large ouverture inférieure, contrôlée par une vanne et en ce que le bord d'attaque des ailettes de l'agitateur a la forme d'une spirale de Bernoulli d'angle constant voisin de 30°.

L'expression spirale de Bernoulli d'angle voisin de 30° signifie une spirale dont la tangente en un point quelconque fait un angle de 30° avec la tangente au cercle passant par ce point.

Les particularités du procédé et du dispositif de l'invention sont :

— d'opérer en discontinu sur des volumes déterminés et successifs de mélange de pâte et d'impureté,

— d'opérer sans diviser ni déchiqueter les éléments de ce mélange, les ailettes opérant seulement un débouchage permanent de la grille et leur forme étant telle que les impuretés glissent le long des ailettes et ne peuvent s'y accumuler.

— d'opérer par lavage, la pâte étant progressivement extraite par la grille et l'eau d'apport lavant progressivement les refus jusqu'à élimination de la pâte,

— d'extraire des refus lavés et débarrassés d'eau, de ce fait peu polluants.

Selon un premier mode de réalisation, l'appareil a la forme d'un cylindre ou tambour de révolution d'axe horizontal dans lequel la plaque perforée est un disque placé sur une paroi latérale, l'entrée des matières à trier étant placée axialement sur la paroi opposée. L'entrée d'un tel appareil peut être directement branchée sur la sortie d'un pulpeur primaire tel qu'un pulpeur de type « hélico ».

Dans ce cas, l'entrée sera maintenue ouverte simultanément à la rotation de l'agitateur et à l'alimentation en eau, soit jusqu'à traitement du contenu complet du pulpeur, soit jusqu'au traitement d'une partie du contenu du pulpeur, soit jusqu'à ce que le volume des refus atteigne une valeur considérée comme suffisante ou maximale.

L'entrée est alors fermée et le lavage poursuivi jusqu'à élimination de la pâte. Puis l'arrivée d'eau est interrompue jusqu'à vidange de l'appareil. Les refus sont alors jetés et une nouvelle opération peut être mise en route.

Selon un second mode de réalisation, il est prévu deux appareils tels que ci-dessus, jumelés, l'arrivée des matières à trier étant raccordée à l'entrée de chaque appareil par l'intermédiaire d'une vanne à trois voies.

Cette disposition permet de réaliser un travail en continu par branchement successif et alterné de chaque appareil.

Un tel appareil jumelé peut être branché sur la sortie d'un appareil fournissant en continu un mélange relativement sale de pâte à papier et d'impuretés.

Dans ce cas, l'arrivée peut n'être pas axiale mais tangentielle, l'importance de créer un vortex. étant diminuée par le fait qu'il s'agit de retraiter une pâte ne contenant pas d'impuretés de très grandes dimensions.

L'invention sera plus amplement décrite avec référence au dessin annexé sur lequel :

la figure 1   est une vue en coupe schématique d'un exemple de réalisation d'appareil selon l'invention ;

la figure 2   est une vue en plan de l'agitateur ;

la figure 3   est une coupe montrant la forme de la section des pales d'agitateur ;

la figure 4   montre la disposition de l'appareil de l'invention par rapport à un pulpeur primaire ;

la figure 5   montre une variante de réalisation sous forme d'appareils jumelés.

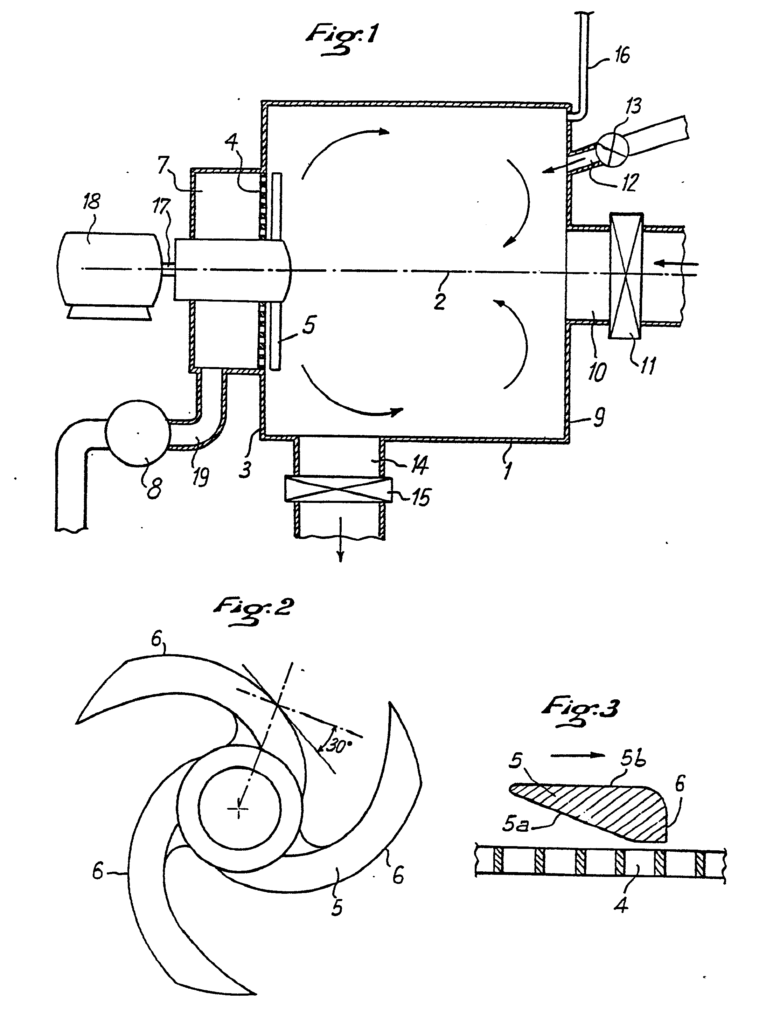

En se reportant à ces figures, on voit que l'appareil selon l'invention se compose d'un volume clos 1 en forme de tambour cylindrique (figure 1) ou de volume de révolution (figure 5) d'axe 2 sensiblement horizontal, comportant une paroi 3 sensiblement verticale munie d'une plaque perforée 4 devant laquelle tourne un agitateur 5 (la plaque 4 peut occuper la totalité de la paroi 3).

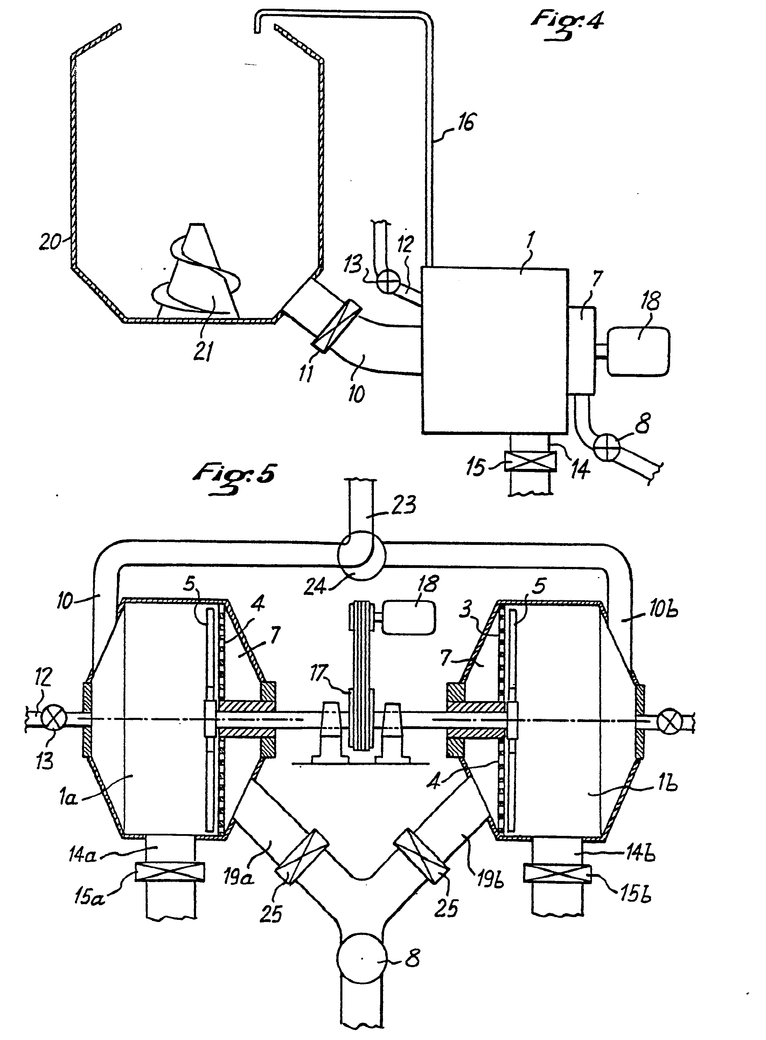

Cet agitateur est dépourvu de rôle désintégrateur ou pulpeur. Dans ce but, il est constitué de pales ou ailettes 5 dont la section (figure 3) a un profil hydrodynamique constitué pour provoquer une dépression devant la grille 4 à chaque passage de pale, le bord d'attaque 6 est approximativement perpendiculaire à la plaque 4 à sa jonction avec la face interne 5a, proche de la plaque 4, le profil étant arrondi seulement à la jonction du bord d'attaque 6 avec la face externe 5b, afin, tout à la fois de ne pas couper ou désintégrer les matières et d'éviter cependant le bourrage.

L'orientation ou le profil à donner à de telles pales pour obtenir une dépression devant la grille à chaque passage de pale est du domaine de l'homme de l'art.

De plus, comme représenté figure 2, le profil du bord d'attaque 6 est conformé en spirale telle que la tangente en un point P quelconque fasse un angle constant et de l'ordre de 30° avec la tangente au cercle passant par le point P. Avec un tel profil, les impuretés ne peuvent rester accrochées aux pales 5 : elles glissent et se dégagent aux extrémités des pales.

Enfin, il existe entre les pales 5 et la grille 4 un espace de quelques millimètres, afin que les impuretés ne soient pas cisaillées entre les pales 5 et la grille 4.

En aval de la grille 4 se trouve un volume 7 relié par la sortie 19 à l'aspiration d'une pompe 8 créant une dépression dans le volume 7 ; l'arrivée 10 des matières contrôlées par la vanne 11 est prévue sur la face 9 opposée à la grille 4 ; l'appareil comporte en outre une arrivée d'eau 12 contrôlée par la vanne 13, une sortie inférieure large 14 également contrôlée par vanne 15 et un évent 16.

L'appareil est entraîné en 17 par le moteur 18.

Dans l'exemple de la figure 1, l'entrée 10 est axiale, à l'opposé de la grille 4. Un tel appareil est particulièrement adapté au triage de matières très sales, telles que le mélange sortant d'un pulpeur primaire n'effectuant pas de séparation, notamment un pulpeur 20 à hélice 21 (figure 4).

Le procédé de l'invention est le suivant :

Après désintégration des vieux papiers par le pulpeur 20, la vanne 11 est ouverte, et le mélange obtenu, dont la concentration en matières sèches est de l'ordre de 15 % à 20 %, est déversé dans l'appareil 1 préalablement rempli d'eau. La vanne 15 est fermée, la pompe 8 est mise en marche et la vanne 13 est ouverte. La pâte acceptée est extraite en 19 sous une concentration de l'ordre de 5 %. Le pulpeur 20 se vide progressivement. Lorsque le pulpeur 20 est vide, ou partiellement vide (selon la capacité de l'appareil 1) la vanne 11 est fermée, l'alimentation en eau 13 est maintenue, de même que la rotation de l'agitateur 5, et les refus se trouvent progressivement lavés. Lorsque l'eau extraite par la pompe 8 est pratiquement dépourvue de pâte, l'arrivée 13 est fermée et la pompe 8 vide l'appareil 1, l'air entrant par l'évent 16. Lorsque l'appareil est vide, la pompe 8 est arrêtée, la vanne 15 est ouverte et les refus sont extraits par gravité et jetés.

On voit ainsi que l'appareil fonctionne en discontinu tant à l'entrée 11 qu'en ce qui concerne les refus jetés en 15 : on voit également que cet appareil travaille en phase finale en ce qui concerne les refus, qui sont dépourvus de pâte et d'eau et peuvent être jetés. Par contre, il ne travaille pas en phase finale en ce qui concerne la pâte. On voit enfin que la pâte extraite par la pompe 8, même si elle contient encore des impuretés, se trouve débarrassée de toutes les impuretés de grandes dimensions et que, par suite la pompe 8 peut être une pompe classique, sans disposition particulière lui permettant d'absorber de telles impuretés.

L'appareil représenté figure 5 est destiné à travailler sur une pâte provenant d'un classeur travaillant en continu. Dans ce but, il est constitué de deux appareils selon l'invention, 1a et 1b, jumelés, et dont les arrivées 10a et 10b sont alimentées à partir d'une arrivée commune 23 par une vanne à trois voies 24. De son côté, l'aspiration de la pompe 8 est branchée sur les sorties 19a, 19b de chaque appareil ou, en variante, il peut être prévu deux pompes 8, une pour chaque appareil.

Le fonctionnement est le suivant :

une première quantité de pâte est traitée, par exemple dans l'appareil 1a, comme décrit plus haut en rapport avec les figures 1 à 4 ; au moment de passer au lavage des refus, la vanne 24 dirige le flux de pâte vers l'appareil 1b qui est déjà plein d'eau ; l'alimentation en eau de l'appareil 1a est maintenue et la pompe 8 extrait la pâte simultanément des deux appareils 1a et 1b ; le lavage dans l'appareil 1a étant terminé, l'arrivée d'eau correspondante est interrompue et la pompe 8 vide l'appareil 1a de son eau, tandis qu'elle poursuit l'extraction de l'appareil 1b ; l'appareil 1a étant vidé d'eau, la vanne d'extraction des refus est ouverte ; ensuite la vanne de refus 15a étant fermée, l'appareil 1a est à nouveau rempli d'eau et prêt pour une nouvelle opération par inversion de la vanne à trois voies 24. Des vannes 25 peuvent être prévues sur les sorties 19.

**Revendications**

1. Dispositif de triage d'un mélange de pâte à papier et d'impuretés, constitué d'un volume clos (1) en forme de tambour ou de volume de révolution d'axe sensiblement horizontal comportant une paroi sensiblement verticale (3) munie d'une plaque perforée (4) devant laquelle tourne un agitateur en forme d'hélice à ailettes profilées (5) se déplaçant à faible distance et dans un plan parallèlement à ladite plaque perforée, lesdites ailettes ayant une section transversale à profil hydrodynamique de nature à créer une dépression devant la plaque perforée à chaque passage d'ailettes, ledit volume (1) comportant une entrée (10) située à l'opposé de la plaque perforée (4), un volume (7) de récupération de pâte acceptée, situé en arrière de la plaque perforée (4) communiquant avec une sortie (19) et une ouverture d'évacuation de rejets, caractérisé en ce qu'il comporte une vanne (11) contrôlant l'entrée (10), une arrivée d'eau (12) contrôlée par une vanne (13), une communication à l'air libre (16), l'évacuation de rejets ayant la forme d'une large ouverture inférieure (14), contrôlée par une vanne (15) et en ce que le bord d'attaque (6) des ailettes de l'agitateur (5) a la forme d'une spirale de Bernoulli d'angle constant voisin de 30°.

2. Dispositif selon la revendication 1 caractérisé en ce que le volume (7) de récupération de pâte acceptée est soumis à l'aspiration d'une pompe (8) placée sur la sortie (19).

3. Dispositif selon l'une quelconque des revendications 1 et 2 caractérisé en ce que le bord d'attaque (6) des ailettes (5) est approximativement perpendiculaire à la plaque (4) à sa jonction avec la face interne (5a) proche de la plaque (4).

4. Dispositif selon l'une quelconque des revendications précédentes, caractérisé en ce qu'il est constitué par le jumelage de deux dispositifs (1a, 1b) selon l'une des revendications précédentes, l'arrivée (23) des matières à trier étant raccordée à l'entrée (10) de chaque appareil par une vanne à trois voies (24).

5. Procédé de triage d'un mélange de pâte à papier et d'impuretés, dans lequel le mélange résultant d'une opération de désintégration de vieux papiers ou de classement de pulpe est transféré dans un volume clos (1) en forme de tambour ou de volume de révolution d'axe sensiblement horizontal, comportant une paroi sensiblement verticale (3) munie d'une plaque perforée (4) devant laquelle tourne un agitateur (5) en forme d'hélice à ailettes profilées se déplaçant à faible distance et dans un plan parallèlement à ladite plaque perforée (4), lesdites ailettes ayant une section transversale à profil hydrodynamique de nature à créer une dépression devant la plaque perforée à chaque passage d'ailettes, ledit volume (1) comportant une entrée (10) située à l'opposé de la plaque perforée (4), un volume annexe (7) de récupération de pâte acceptée, en arrière de la plaque perforée (4) et une sortie de refus, caractérisé en ce que le mélange à trier est introduit en discontinu (en « batch ») dans le volume (1) clos par ouverture et fermeture d'une vanne (11) placée sur l'entrée (10), le volume (7) étant soumis à l'aspiration d'une pompe (8), le mélange est additionné d'eau au moyen d'une arrivée d'eau (12) pendant son introduction, cette addition d'eau étant poursuivie après fermeture de la vanne d'entrée (11) jusqu'à lavage des refus, puis l'arrivée d'eau (12) est fermée en (13) et le volume est vidé d'eau par l'aspiration (8) ci-dessus, après quoi les refus sont déchargés par gravité par une large ouverture inférieure (14) dont la vanne (15) est ouverte seulement pour opérer cette décharge et en ce que les ailettes ont un bord d'attaque conformé selon une spirale de Bernoulli d'angle constant de l'ordre de 30°.

6. Procédé selon la revendication 5, caractérisé en ce qu'on opère en continu par jumelage de deux volumes (1a) (1b) tels que ci-dessus et envoi des matières à trier alternativement dans l'un et l'autre volume.

**Claims**

1. A device for sorting a mixture of paper pulp and contaminants, formed of a closed volume (1) having the shape of a drum or of a volume having an axis of revolution with a substantially horizontal axis comprising a substantially vertical wall (3) provided with a perforated plate (4) in front of which rotates a stirring member having the shape of an helix with profiled foils (5) moving at a short spacing from said perforated plate in a plane parallel thereto, said foils having a cross-section with an hydrodynamic profile appropriate for generating a depression in front of the perforated plate at each passage of foils, said volume (1) comprising an inlet (10) located opposite to the perforated plate (4), a volume (7) for the recovery of accepted pulp located behind the perforated plate (4), communicating with an outlet (19), and an aperture for the evacuation of wastes, characterized in that it comprises a valve (11) controlling the inlet (10), a water supply duct (12) controlled by a valve (13), an atmospheric venting duct (16), the aperture for the evacuation of wastes having the shape of a wide bottom aperture (14) controlled by a valve (15) and in that the leading edge (6) of the stirring foils (5) has the shape of a Bernoulli spiral with a constant angle of approximately 30°.

2. A device according to claim 1, characterized in that the volume (7) for the recovery of accepted pulp is subjected to suction from a pump (8) placed on the outlet (19).

3. A device according to either of claims 1 and 2, characterized in that the leading edge (6) of foils (5) is approximately perpendicular to plate (4) along its junction with the internal face (5a) which lies close to the plate (4).

4. A device according to any of the above claims, characterized in that it consists of a twin set of two devices (1a, 1b) according to one of the above claims, the feed line (23) for the materials to be sorted being connected to the inlet (10) of each device through a three-way valve (24).

5. A method for sorting a mixture of paper pulp and contaminants, in which the mixture resulting from a waste paper disintegrating operation or from a pulp classifying operation is transferred into a closed volume (1) having the shape of a drum or of a body having an axis of revolution with a substantially horizontal axis, comprising a substantially vertical wall (3) provided with a perforated plate (4) in front of which rotates a stirring member (5) having the shape of an helix with profiled foils moving at a short spacing from said perforated plate (4) in a plane parallel thereto, said foils having a cross-section with an hydrodynamic profile appropriate for generating a depression in front of the perforated plate at each passage of foils, said volume (1) comprising an inlet (10) located opposite the perforated plate (4), an auxiliary volume (7) for the recovery of accepted pulp, behind the perforated plate (4) and an outlet for waste materials, characterized in that the mixture to be sorted is introduced discontinuously (in batches) into the closed volume (1) by opening and closing a valve (11) placed on inlet (10), the auxiliary volume (7) being subjected to suction from a pump (8), water being added to the mixture by means of a water feed duct (12) while the mixture is being introduced, this addition of water being continued after closing the inlet valve (11) until the wastes have been washed, after which the water feed line (12) is shut by shutting valve (13) and water is drained out of volume (1) by means of said suction pump (8), wastes being subsequently released through gravity across a wide bottom aperture (14) whose valve (15) is opened solely for carrying out this release, and in that the foils (5) have a leading edge shaped as a Bernoulli spiral with a constant angle to the order of 30°.

6. A method according to claim 5, characterized in that it is carried out continuously by means of a twin set of two volumes (1a, 1b) such as above and in that materials to be sorted are sent alternatively into either volume.

**Patentansprüche**

1. Abscheidevorrichtung von Verunreinigungen aus Papierbrei mit einer geschlossenen Kammer (1) in Form einer Trommel oder einer sich um eine waagrechte Achse drehenden Kammer mit einer senkrechten Wand (3) mit einer Lochplatte (4), vor der sich in geringem Abstand davon ein Rührwerk in Form eines Flügelrads mit Profilflügeln (5) auf einer zur Lochplatte parallelen Ebene dreht, wobei die Rührflügel einen Querschnitt mit hydrodynamischen Profil aufweisen, um bei jeder Flügeldrehung vor der Lochplatte einen Unterdruck zu erzeugen, und wobei die Kammer (1) einen gegenüber der Lochplatte angeordneten Einlauf (10), einen hinter der Lochplatte (4) angeordneten und mit einem Auslauf (19) verbundenen Gutstoffauffangraum (7) und eine Abproduktableitungsöffnung aufweist, dadurch gekennzeichnet, daß die Vorrichtung ein den Einlauf (10) steuerndes Ventil (11), eine durch ein Ventil (13) geregelte Wasserzufuhr (12), ein Entlüftungsrohr (16) und eine Abproduktableitung in Form einer ventilgesteuerten (15), unten angeordneten Großöffnung (14) besitzt und dadurch, daß die Vorderkante (6) der Rührflügel (5) die Form einer Bernoulli-Spirale mit konstantem Winkel von zirka 30° hat.

2. Vorrichtung nach Anspruch 1, dadurch gekennzeichnet, daß der Gutstoffauffangraum (7) der Saugkraft einer am Auslauf (19) angebrachten Pumpe (8) ausgesetzt ist.

3. Vorrichtung nach Anspruch 1-2, dadurch gekennzeichnet, daß die Vorderkante (6) der Rührflügel (5) am plattenseitigen (4) Übergang zur Innenseite (5a) ungefähr senkrecht zur Lochplatte (4) steht.

4. Vorrichtung nach Anspruch 1-3, dadurch gekennzeichnet, daß sie aus der Kopplung zweier Vorrichtungen (1a, 1b) nach Anspruch 1-3 besteht, wobei die Zufuhr (23) des zu sortierenden Guts über ein Dreiwegeventil (24) an den jeweiligen Einlauf (10) jeder Vorrichtung angeschlossen ist.

5. Abscheidungsverfahren von Verunreinigungen aus Papierbrei, bei dem das aus der Auflösung von Altpapier gewonnene bzw. aus einer bestimmten Papierbreieinstufung anfallende Gut in eine Kammer (1) in Form einer Trommel oder in einen sich um eine waagrechte Achse drehenden Raum mit eine senkrechten Wand (3) mit einer Lochplatte (4) eingebracht wird, vor der sich in geringem Abstand davon ein Rührwerk in Form eines Flügelrads mit Profilflügeln (5) auf einer zur Lochplatte (4) parallelen Ebene dreht, wobei die Rührflügel einen Querschnitt mit hydrodynamischem Profil aufweisen, um bei jeder Flügeldrehung vor der Lochplatte einen Unterdruck zu erzeugen, und wobei die Kammer (1) einen gegenüber der Lochplatte (4) angeordneten Einlauf (10), eine hinter der Lochplatte (4) angeordnete Gutstoffauffangkammer (7) und eine Abproduktableitung besitzt, dadurch gekennzeichnet, daß das zu sortierende Gut losweise durch Öffnen bzw. Schließen eines am Einlauf (10) angeordneten Ventils (11) in die Kammer (1) eingebracht wird, daß die Kammer (7) der Saugkraft einer Pumpe (8) ausgesetzt wird, daß das Gut während des Einlaufs über eine Wasserzufuhr (12) mit Wasser versetzt wird, daß die Wasserzuleitung auch nach dem Schließen des Einlaufventils (11) bis zum Auswaschen der Abprodukte fortgesetzt wird, daß dann die Wasserzufuhr mit dem Ventil (13) geschlossen wird, daß die Kammer durch die Wasserabsaugung mit Hilfe der Pumpe (8) geleert wird und die Abprodukte durch Schwerkraft über die unten angeordnete Großöffnung (14), deren Ventil (15) nur für diese Abführung geöffnet wird, abgeführt werden und dadurch, daß die Rührflügel eine Vorderkante in Form einer Bernoulli-Spirale mit konstantem Winkel von zirka 30° besitzen.

6. Verfahren nach Anspruch 5, dadurch gekennzeichnet, daß durch die Kopplung der beiden Kammern (1a und 1b) und die abwechselnde Beschickung der einen bzw. der anderen Kammer mit zu sortierendem Gut im Dauerbetrieb gearbeitet wird.

*Fig.1*

*Fig.2*

*Fig.3*

Fig.4

Fig.5